(19) **Europäisches Patentamt / European Patent Office / Office européen des brevets**

(11) **EP 2 996 887 B1**

(12) **FASCICULE DE BREVET EUROPEEN**

(45) Date de publication et mention
de la délivrance du brevet:
**23.08.2017 Bulletin 2017/34**

(21) Numéro de dépôt: **14725067.4**

(22) Date de dépôt: **13.05.2014**

(51) Int Cl.:
**B60C 17/00** $^{(2006.01)}$      **C08L 9/00** $^{(2006.01)}$

(86) Numéro de dépôt international:
**PCT/EP2014/059694**

(87) Numéro de publication internationale:
**WO 2014/184159 (20.11.2014 Gazette 2014/47)**

(54) **COMPOSITION DE CAOUTCHOUC À HAUTE PROCESSABILITÉ POUR PNEUMATIQUE ADAPTÉ POUR UN ROULAGE À PLAT**

KAUTSCHUKZUSAMMENSETZUNG MIT HOHER VERARBEITBARKEIT FÜR NOTLAUFREIFEN

RUBBER COMPOSITION WITH HIGH PROCESSABILITY FOR RUN FLAT TYRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.05.2013 FR 1354245**

(43) Date de publication de la demande:
**23.03.2016 Bulletin 2016/12**

(73) Titulaire: **Compagnie Générale des Etablissements Michelin
63000 Clermont-Ferrand (FR)**

(72) Inventeurs:
• **BARBOUTEAU, Joël**
  **F-63040 Clermont-Ferrand Cedex 9 (FR)**
• **EL-OTHMANI, Karim**
  **F-63040 Clermont-Ferrand Cedex 9 (FR)**

(74) Mandataire: **Desbordes, Guillaume
MANUFACTURE FRANCAISE DES PNEUMATIQUES
MICHELIN
Place des Carmes-Déchaux
DGD/PI-F35/Ladoux
63040 Clermont-Ferrand Cedex 9 (FR)**

(56) Documents cités:
**WO-A1-2011/113899      WO-A1-2013/053877
WO-A1-2013/053879      KR-A- 20130 019 044**

• **DATABASE WPI Week 200978 Thomson Scientific, London, GB; AN 2009-R34128 XP002711719, & JP 2009 270003 A (YOKOHAMA RUBBER CO LTD) 19 novembre 2009 (2009-11-19)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne une composition de caoutchouc et un pneumatique adapté pour le roulage à plat.

Depuis quelques années, les manufacturiers de pneumatiques cherchent à supprimer la nécessité de la présence d'une roue de secours à bord du véhicule tout en garantissant la possibilité au véhicule de poursuivre sa route malgré une perte importante ou totale de pression d'un ou plusieurs pneumatiques. Cela permet par exemple de se rendre à un point de dépannage sans devoir s'arrêter, dans des circonstances souvent hasardeuses, pour installer la roue de secours.

Une solution envisagée est l'utilisation de pneumatiques adaptés pour un roulage à plat et pourvus de flancs autoporteurs, (parfois désignés par les appellations commerciales en langue anglaise « ZP » pour « zero pressure » ou « SST » pour « self supporting tire »).

On connait de l'état de la technique un pneumatique adapté pour un roulage à plat comportant un sommet comprenant une armature de sommet, formée de deux nappes de sommet d'éléments de renfort et surmontée d'une bande de roulement. Deux flancs prolongent le sommet radialement vers l'intérieur. Ces flancs sont renforcés au moyen d'inserts en caoutchouc permettant de supporter une charge à pression réduite, voire sans pression. Chaque insert en caoutchouc est fabriqué à partir d'une composition de caoutchouc à base d'une composition de caoutchouc réticulable. Chaque insert doit présenter des propriétés à cuit, notamment une rigidité suffisante, pour supporter au moins partiellement la charge à pression réduite, voire sans pression.

Le pneumatique comporte en outre deux bourrelets comprenant chacun une tringle ainsi qu'une armature de carcasse s'étendant depuis les bourrelets à travers les flancs vers le sommet et comportant deux nappes de carcasse d'éléments de renfort. L'une des nappes de carcasse est ancrée à chacun des bourrelets par un retournement autour de la tringle et l'autre nappe carcasse s'arrête radialement à l'extérieur de la tringle. Les deux nappes de carcasse comprennent des éléments de renfort textile en rayonne.

Lorsque la pression de gonflage est significativement abaissée par rapport à la pression de service, voire même nulle (on parle alors de mode « roulage à plat »), le pneumatique doit permettre de rouler une distance donnée à une vitesse donnée. Cette performance, dite performance « RME » (Roulage Mode Etendu), est requise par la législation ou par les constructeurs automobiles pour permettre au manufacturier de présenter le pneumatique comme adapté pour le roulage à plat.

Lorsque la pression de gonflage est proche de la pression de service (on parle alors de mode « roulage normal »), il est souhaitable que le pneumatique présente des performances, dites performances « RMG » (Roulage Mode Gonflé), aussi élevées que possible. Ces performances RMG comprennent, entre autres, la masse, la résistance au roulement ou encore le confort.

Chaque insert de flanc est fabriqué à partir d'une bande de la composition de caoutchouc réticulable extrudée. Ainsi, on souhaite évidemment que la composition soit facile et rapide à extruder, c'est-à-dire qu'elle présente la meilleure processabilité possible. La processabilité de la composition de caoutchouc réticulable, est liée à certaines propriétés à cru, notamment sa plasticité, qui est souvent incompatible avec l'obtention de la performance RME.

L'invention a pour but une composition de caoutchouc réticulable destinée à former un insert de flanc d'un pneumatique adapté pour un roulage à plat assurant la performance RME requise et présentant une bonne processabilité.

Dans la présente description, sauf indication expresse différente, tous les pourcentages (%) indiqués sont des % en poids. Le sigle « pce » signifie parties en poids pour cent parties d'élastomère.

D'autre part, sauf indication contraire, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

A cet effet, l'invention a pour objet une composition de caoutchouc réticulable comprenant:

- un premier élastomère constitué de polybutadiène présentant une plasticité Mooney PMoo telle que 40 unités Mooney $\leq$ PMoo < 55 unités Mooney,
- un deuxième élastomère,
- un noir de carbone présentant une surface spécifique comprise dans un domaine de valeurs allant de 15 $m^2/g$ à 25 $m^2/g$ et un indice d'adsorption d'huile d'échantillon comprimé (COAN) compris dans un domaine de valeurs allant de 65 ml/100 g à 85 ml/100 g.

La composition selon l'invention présente une processabilité élevée et permet d'obtenir un insert de flanc d'un pneumatique adapté pour un roulage à plat présentant une rigidité suffisante pour assurer la performance RME. En effet, les performances RME et de processabilité sont obtenues de façon surprenante grâce à la combinaison de matériaux utilisée pour la fabrication de la composition de caoutchouc selon l'invention. Conformément à l'invention, cette composition de caoutchouc comprend un mélange d'élastomères comprenant un taux majoritaire de polybutadiène, ce polybutadiène présentant une plasticité Mooney PMoo PMoo telle que 40 ≤ PMoo < 55 unités Mooney, ainsi qu'un noir de carbone présentant une faible surface spécifique et une haute structure.

Un polybutadiène caractérisé par une plasticité Mooney PMoo élevée présente, la plupart du temps, un poids moléculaire élevé. On mesure la plasticité Mooney PMoo en utilisant un consistomètre selon la norme ASTM D-1646.

On peut décrire le noir de carbone comme étant constitué d'agrégats de fines particules dans lesquels les fines particules fusionnent ensemble pour former les agrégats. Les caractéristiques de ces agrégats peuvent varier grandement entre les différents types de noir de carbone.

On caractérise les noirs de carbone par différentes propriétés, notamment par la surface spécifique, qui est caractéristique de la taille des particules et par l'indice d'adsorption d'huile d'échantillon comprimé (COAN pour « Compressed Oil Adsorption Number » en anglais).

On détermine la surface spécifique du noir de carbone selon la norme ASTM D-6556 en mesurant la surface externe totale par adsorption d'azote. On détermine la structure du noir de carbone selon la norme ASTM D-3493 en mesurant l'indice d'adsorption d'huile d'échantillon comprimé COAN.

De préférence, la surface spécifique du noir de carbone est comprise dans un domaine de valeurs allant de 17 $m^2$/g à 22 $m^2$/g.

De préférence, l'indice d'adsorption d'huile d'échantillon comprimé COAN est compris dans un domaine de valeur allant de 70 ml/100 g à 80 ml/100 g.

De préférence, le taux du premier élastomère est strictement supérieur à 50 pce.

Le premier élastomère présente une plasticité Mooney PMoo telle que 40 unités Mooney ≤ PMoo < 55 unités Mooney et encore plus préférentiellement telle que 40 unités Mooney ≤ PMoo ≤ 50 unités Mooney. Ainsi, on améliore la processabilité de la composition de caoutchouc réticulable en diminuant la plasticité Mooney du premier élastomère.

Avantageusement, le taux du premier élastomère est compris dans un intervalle de valeurs allant de 50 à 80 pce, de préférence de 55 à 75 pce et plus préférentiellement de 60 à 70 pce. Ainsi, on augmente la rigidité de la composition de caoutchouc et donc la performance RME sans pour autant pénaliser la processabilité de la composition de caoutchouc réticulable.

De préférence, le reste de caoutchouc est alors constitué du deuxième élastomère.

De préférence, le polybutadiène présente un fort taux de motifs cis-1,4. Ainsi, dans un mode de réalisation, le polybutadiène présente un taux de motifs cis-1,4 d'au moins 80% et de préférence d'au moins 90% en poids du poids total du polybutadiène. Dans un autre mode de réalisation, le polybutadiène présente un taux de motifs cis-1,4 compris dans un domaine de valeurs allant de 80% à 99%, de préférence de 90% à 99% et plus préférentiellement de 92% à 99% en poids du poids total du polybutadiène.

Dans un mode de réalisation, le deuxième élastomère est du type diénique.

Par élastomère ou caoutchouc (les deux termes étant synonymes) du type diénique, on entend de manière générale un élastomère issu au moins en partie (i.e. un homopolymère ou un copolymère) de monomères diènes (monomères porteurs de deux doubles liaisons carbone-carbone, conjuguées ou non).

De préférence, le deuxième élastomère du type diénique est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères.

De tels copolymères sont plus préférentiellement choisis dans le groupe constitué par les copolymères de styrène-butadiène (SBR), les copolymères d'isoprène-butadiène (BIR), les copolymères d'isoprène-styrène (SIR), les copolymères d'isoprène-butadiène-styrène (SBIR) et les mélanges de tels copolymères.

Dans les modes de réalisation dans lequel la composition comprend un deuxième élastomère du type diénique, celui-ci confère, entre autres, du collant à cru (« tack » en anglais) à la composition. Ainsi, on limite voire on supprime la nécessité d'utiliser une résine tackifiante qui pourrait augmenter l'hystérèse de la composition et donc diminuer la capacité de l'insert de flanc à évacuer la chaleur en mode roulage à plat. On augmente ainsi la performance RME du pneumatique.

Avantageusement, la composition de caoutchouc réticulable comprend un taux de noir de carbone à faible surface spécifique et à haute structure compris dans un domaine de valeurs allant de 30 à 100 pce, de préférence de 35 à 80 pce, plus préférentiellement de 40 à 75 pce et encore plus préférentiellement de 40 à 60 pce.

De préférence, le noir de carbone à faible surface spécifique et à haute structure présente un indice d'adsorption d'huile (OAN) compris dans un domaine de valeurs allant de 100 ml/100 g à 150 ml/100 g, de préférence de 110 ml/100 g à 150 ml/100 g, plus préférentiellement de 120 ml/100 g à 150 ml/100 g, encore plus préférentiellement de 125 ml/100 g à 150 ml/100 g et très préférentiellement de 130 ml/100 g à 150 ml/100 g.

L'indice d'adsorption d'huile (OAN pour « Oil Adsorption Number » en anglais), est également caractéristique de la structure du noir de carbone. On mesure l'indice d'adsorption d'huile OAN en utilisant du dibutyl phthalate conformément à la norme ASTM D-2414.

De préférence, le noir de carbone à faible surface spécifique et à haute structure présente un indice d'iode compris dans un domaine de valeurs allant de 10 mg/g à 25 mg/g, de préférence de 15 mg/g à 23 mg/g et plus préférentiellement de 18 mg/g à 21 mg/g.

L'activité de surface d'un noir de carbone peut également être mesurée par la différence entre la surface spécifique et l'indice d'iode selon la norme ASTM D-1510. L'indice d'iode est une mesure de l'adsorption de l'iode par le noir de carbone et est également utilisée comme mesure de la surface spécifique. Les noirs de carbone à haute activité ont tendance à avoir un indice positif alors que des noirs de carbone à plus faible activité ont tendance à avoir un indice négatif.

La composition de caoutchouc de l'insert de flanc peut également comprendre tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes telles que des bismaleimides, des accepteurs (par exemple résine phénolique novolaque) ou des donneurs de méthylène (par exemple HMT ou H3M).

De préférence, la composition comprend un système de réticulation, plus préférentiellement de vulcanisation. Le système de réticulation, ici de vulcanisation, comprend un agent donneur de soufre, par exemple du soufre et des activateurs de vulcanisation.

On fabrique la composition selon l'invention dans des mélangeurs appropriés, en utilisant deux phases de préparation successives bien connues de l'homme du métier : une première phase de travail ou malaxage thermo-mécanique (phase "non-productive") à haute température, jusqu'à une température maximale comprise entre 130°C et 170°C, suivie d'une seconde phase de travail mécanique (phase "productive") à plus basse température, typiquement inférieure à 110°C au cours de laquelle est incorporé le système de réticulation ou vulcanisation.

A titre d'exemple, la première phase (non-productive) est conduite en une seule étape thermomécanique au cours de laquelle on introduit, dans un mélangeur interne, les différents composants à l'exception du système de vulcanisation. La durée totale du malaxage, dans cette phase non-productive, est de préférence comprise entre 2 et 10 minutes.

Après refroidissement du mélange ainsi obtenu, on incorpore alors le système de vulcanisation à basse température, généralement dans un mélangeur externe tel qu'un mélangeur à cylindres. Le tout est alors mélangé (phase productive) pendant quelques minutes, par exemple entre 1 et 30 minutes.

La composition ainsi obtenue est ensuite calandrée, par exemple sous la forme d'une feuille, d'une plaque ou encore extrudée, par exemple pour former un profilé de caoutchouc utilisé pour la fabrication de produits semi-finis tels que des inserts de flancs utilisés pour la fabrication d'un pneumatique selon l'invention tel que décrit ci-dessous.

La vulcanisation (ou cuisson) est conduite de manière connue à une température généralement comprise entre 130°C et 200°C, de préférence sous pression, pendant un temps suffisant qui peut varier par exemple entre 5 et 90 min.

L'invention a également pour objet un pneumatique adapté pour un roulage à plat comprenant un insert de flanc fabriqué à partir d'une composition de caoutchouc à base d'une composition de caoutchouc réticulable telle que définie ci-dessus.

En plus d'obtenir la performance RME requise, le pneumatique selon l'invention présente des performances RMG relativement proches de celle d'un pneumatique standard non pourvus de flancs autoporteurs.

En effet, les flancs autoporteurs du pneumatique de l'état de la technique induisent des pertes élevées de performances RMG, notamment par rapport à un pneumatique standard non pourvu de flancs autoporteurs. En particulier, la masse de ces inserts conduit à une augmentation de la masse totale du pneumatique de l'état de la technique. En outre, l'ajout de ces inserts conduit inévitablement à une augmentation de l'hystérèse et donc à une augmentation de la résistance au roulement. De plus, ces inserts augmentent la rigidité des flancs du pneumatique de l'état de la technique ce qui réduit le confort du pneumatique.

Au contraire, le pneumatique selon l'invention présente une rigidité et une hystérèse relativement faible. Cette combinaison permet d'obtenir un pneumatique adapté pour le roulage à plat et présentant des performances RMG meilleures que celles du pneumatique de l'état de la technique, notamment une résistance au roulement améliorée, une masse inférieure et un meilleur confort tout en préservant la performance RME requise.

Par l'expression « à base de », il faut bien entendu comprendre que la composition de caoutchouc est faite d'une composition de caoutchouc cuite ou vulcanisée qui était, lors de sa fabrication, dans un état cru. La composition cuite ou vulcanisée de caoutchouc est donc « à base de » la composition crue de caoutchouc. En d'autres termes, la composition réticulée de caoutchouc est à base de ou comprend les constituants de la composition réticulable de caoutchouc.

De préférence, les pneumatiques peuvent être destinés à des véhicules à moteur du type tourisme, 4x4, "SUV" (Sport Utility Vehicles).

Avantageusement, le pneumatique comprend une armature de carcasse comprenant au moins une nappe de carcasse.

De préférence, l'armature de carcasse comprend une seule nappe de carcasse.

En n'utilisant qu'une nappe de carcasse, on réduit davantage le coût, la masse mais également l'hystérèse et donc la résistance au roulement du pneumatique. La présence d'une seule nappe de carcasse permet d'obtenir un pneumatique dont l'armature de carcasse est plus souple qu'un pneumatique dont l'armature de carcasse comprend deux nappes de carcasse. Ainsi, on réduit la raideur verticale du pneumatique et on améliore le confort de ce dernier, le rapprochant ainsi du confort d'un pneumatique standard dépourvu de flancs autoporteurs.

De préférence, la nappe de carcasse comprend au moins un élément de renfort textile. Par textile, on comprend un matériau choisi parmi un polyester, un polyamide, par exemple un polyamide aliphatique comme le nylon ou un polyamide aromatique comme l'aramide, une polycétone, une cellulose comme la rayonne ou un mélange de ces matériaux.

Avantageusement, la nappe de carcasse comprend au moins un élément de renfort en polyester.

La composition de caoutchouc présente préférentiellement une résistance à l'échauffement supérieure à celle des compositions des inserts de flanc du pneumatique de l'état de la technique. Ainsi, en mode roulage plat, c'est-à-dire lorsque la température des inserts de flanc monte (en raison de l'échauffement lié à la perte de pression), la température de l'insert de flanc du pneumatique monte moins rapidement et moins haut par rapport à la température d'un insert de flanc du pneumatique de l'état de la technique. Il donc possible d'utiliser des éléments de renfort en polyester qui présentent une stabilité thermique inférieure à celle de la rayonne, mais suffisante compte tenu de la résistance à l'échauffement élevée des inserts de flanc du pneumatique.

De plus, contrairement à la rayonne, le polyester est relativement bon marché et ne nécessite pas ou peu de précautions vis-à-vis de l'environnement.

De préférence, la nappe de carcasse comprend plusieurs éléments de renfort en polyester, et plus préférentiellement tous ses éléments de renfort sont en polyester.

De façon optionnelle, le pneumatique comprend deux bourrelets comportant chacun au moins une structure annulaire de renfort, l'armature de carcasse étant ancrée dans chacun des bourrelets par un retournement autour de la structure annulaire de renfort.

De façon optionnelle, l'élément de renfort en polyester comprend au moins deux brins multifilamentaires en polyester retordus ensemble.

L'élément de renfort est également appelé retors. Chaque brin multifilamentaire est également appelé surtors et comprend une pluralité de filaments élémentaires ou monofilaments éventuellement entremêlés les uns avec les autres. Chaque brin comprend entre 50 et 2000 monofilaments.

De façon optionnelle, les filaments élémentaires constitutifs de chaque brin multifilamentaire en polyester sont retordus selon un facteur de torsion compris dans un domaine de valeurs allant de 90 à 170, de préférence de 120 à 150.

On rappelle ici que, dans un élément de renfort, le facteur de torsion d'un brin multifilamentaire (plus exactement, des filaments élémentaires constitutifs dudit brin) s'exprime selon la relation qui suit :

$$K = (\text{Torsion en tours/mètre}) \times [(\text{Titre du brin (en tex)} / (1000.\rho)]^{1/2}$$

dans laquelle la torsion est exprimée en tours par mètre de brin, le titre du brin est exprimé en tex (poids en gramme de 1000 mètres de brin), et enfin p est la densité ou masse volumique (en $g/cm^3$) du matériau constitutif du brin (1,25 à 1,40 pour les polyesters et 1,38 pour le PET).

Dans un mode de réalisation, préférentiellement utilisé lorsque le pneumatique comprend une unique nappe de carcasse, le titre de chaque brin multifilamentaire en polyester est compris dans un domaine de valeurs allant de 100 à 500 tex, de préférence de 300 à 370 tex et la torsion de chaque brin multifilamentaire en polyester avant retordage des brins entre eux est comprise dans un domaine de valeurs allant de 200 à 500 tours par mètre, de préférence de 200 à 340 tours par mètre, et plus préférentiellement de 240 à 300 tours par mètre.

Dans un mode de réalisation, préférentiellement utilisé lorsque le pneumatique comprend deux nappes de carcasse, le titre de chaque brin multifilamentaire en polyester est compris dans un domaine de valeurs allant de 100 à 500 tex, de préférence de 110 à 170 tex et la torsion de chaque brin multifilamentaire en polyester avant retordage des brins entre eux est comprise dans un domaine de valeurs allant de 200 à 500 tours par mètre, de préférence de 300 à 500 tours par mètre, et plus préférentiellement de 380 à 470 tours par mètre.

L'utilisation d'un titre relativement faible permet de réduire le diamètre de l'élément de renfort grâce à une meilleure ténacité du polyester par rapport celle de la rayonne qui présente une force à rupture équivalente mais pour un titre plus élevé et donc un diamètre relativement grand. Ainsi, on nécessite une quantité de gomme moindre pour calandrer les éléments de renfort en polyester par rapport à des éléments de renfort en rayonne. La réduction de masse de gomme permet de réduire le coût, la masse mais également l'hystérèse et donc la résistance au roulement du pneumatique.

En effet, de préférence, le diamètre de l'élément de renfort est inférieur ou égal à 1,1 mm, voire 1 mm et plus préférentiellement à 0,7 mm. Le diamètre de l'élément de renfort est celui du cercle à l'intérieur duquel est inscrit l'élément de renfort. Lorsque le titre est relativement faible, la torsion de chaque brin est suffisamment élevée pour que l'élément de renfort soit suffisamment endurant. La torsion est également suffisamment réduite pour obtenir un module élevé et donc améliorer la performance RME du pneumatique.

Les valeurs décrites ci-dessus sont mesurées sur des éléments de renfort directement fabriqués ou bien extraits de nappes de renfort. En variante, les valeurs décrites ci-dessus sont mesurées sur des éléments de renfort extraits d'un pneumatique.

De préférence, chaque brin est enroulé en hélice autour de l'autre.

Avantageusement, le polyester est choisi parmi le polyéthylène téréphtalate (PET), le polyéthylène naphthalate (PEN), le polybutylène téréphtalate (PBT), le polybutylène naphthalate (PBN), le polypropylène téréphthalate (PPT) ou le polypropylène naphthalate (PPN), de préférence le polyester est du polyéthylène téréphtalate (PET).

L'invention sera mieux comprise à la lecture de la description qui va suivre, donnée uniquement à titre d'exemple non limitatif et faite en se référant aux dessins dans lesquels:

- la figure 1 est une vue en coupe radiale d'un pneumatique adapté pour un roulage à plat selon un premier mode de réalisation de l'invention;
- la figure 2 illustre une vue de détails d'un élément de renfort du pneumatique de la figure 1 ;
- les figures 3 et 4 sont des vues analogues à celle de la figure 1 de pneumatiques respectivement selon des deuxième et troisième modes de réalisation.

Dans l'emploi du terme « radial », il convient de distinguer plusieurs utilisations différentes du mot par la personne du métier. Premièrement, l'expression se réfère à un rayon du pneumatique. C'est dans ce sens qu'on dit d'un point A qu'il est « radialement intérieur » à un point B (ou « radialement à l'intérieur » du point B) s'il est plus près de l'axe de rotation du pneumatique que le point B. Inversement, un point C est dit « radialement extérieur à » un point D (ou « radialement à l'extérieur » du point D) s'il est plus éloigné de l'axe de rotation du pneumatique que le point D. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un élément de renfort ou une armature est dit « radial » lorsque l'élément de renfort ou les éléments de renfort de l'armature font avec la direction circonférentielle un angle supérieur ou égal à 65° et inférieur ou égal à 90°.

Enfin, par « coupe radiale » ou « section radiale » on entend ici une coupe ou une section selon un plan qui comporte l'axe de rotation du pneumatique.

Une direction « axiale » est une direction parallèle à l'axe de rotation du pneumatique. Un point E est dit « axialement intérieur » à un point F (ou «axialement à l'intérieur » du point F) s'il est plus près du plan médian du pneumatique que le point F. Inversement, un point G est dit « axialement extérieur à » un point H (ou « axialement à l'extérieur » du point H) s'il est plus éloigné du plan médian du pneumatique que le point H.

Le « plan médian » du pneumatique est le plan qui est normal à l'axe de rotation du pneumatique et qui se situe à équidistance des structures annulaires de renfort de chaque bourrelet.

Une direction « circonférentielle » est une direction qui est perpendiculaire à la fois à un rayon du pneumatique et à la direction axiale.

## EXEMPLES DE PNEUMATIQUE SELON L'INVENTION

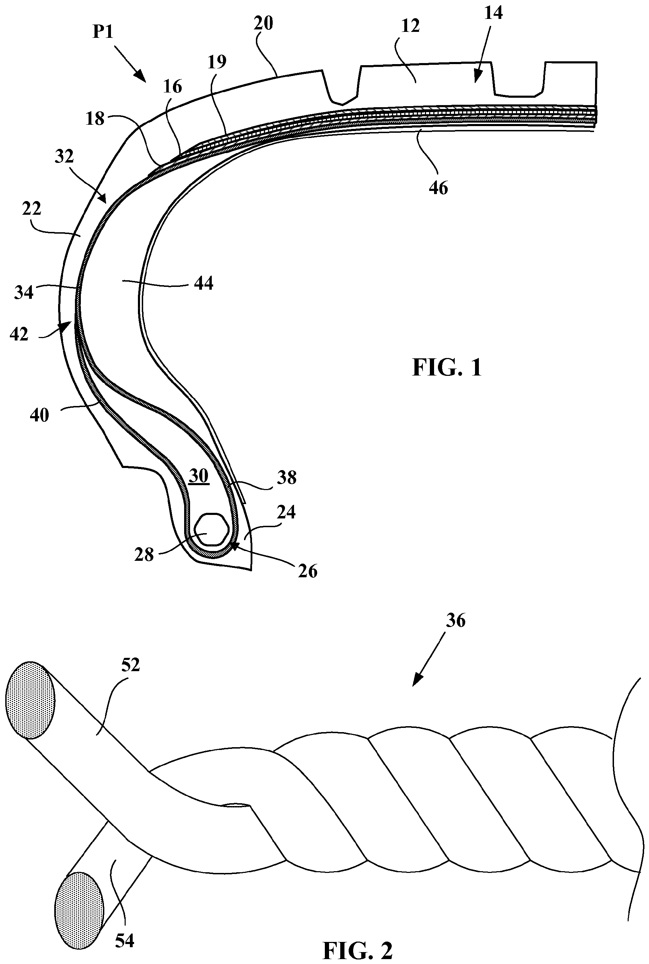

On a représenté schématiquement sur la figure 1, vue en coupe radiale, un pneumatique selon un premier mode de réalisation de l'invention désigné par la référence générale P1. Le pneumatique P1 est du type pour roulage à plat. Le pneumatique P1 est pour véhicule de tourisme.

Ce pneumatique P1 comporte un sommet 12 comprenant une armature de sommet 14, formée de deux nappes de sommet d'éléments de renfort 16, 18 et d'une nappe de frettage 19. L'armature de sommet 14 est surmontée d'une bande de roulement 20. Ici, la nappe de frettage 19 est disposée radialement extérieure aux nappes 16, 18, entre les nappes 16, 18 et la bande de roulement 20. Deux flancs autoporteurs 22 prolongent le sommet 12 radialement vers l'intérieur.

Le pneumatique P1 comporte en outre deux bourrelets 24 radialement intérieurs aux flancs 22 et comportant chacun une structure annulaire de renfort 26, en l'occurrence une tringle 28, surmontée d'un masse de gomme 30 de bourrage sur tringle, ainsi qu'une armature de carcasse radiale 32.

L'armature de carcasse 32 comporte de préférence une seule nappe de carcasse 34 d'éléments de renfort 36, la nappe 34 étant ancrée à chacun des bourrelets 24 par un retournement autour de la tringle 28, de manière à former dans chaque bourrelet 24 un brin aller 38 s'étendant depuis les bourrelets à travers les flancs vers le sommet, et un brin retour 40, l'extrémité radialement extérieure 42 du brin retour 40 étant sensiblement à mi-hauteur du pneumatique. L'armature de carcasse 32 s'étend depuis les bourrelets 24 à travers les flancs 22 vers le sommet 12.

Les compositions de caoutchouc utilisées pour les nappes de sommet 16, 18 et de carcasse 34 sont des compositions conventionnelles pour calandrage d'éléments de renfort, typiquement à base de caoutchouc naturel, de noir de carbone, d'un système de vulcanisation et des additifs usuels. Lorsque les éléments de renfort sont textiles, en particulier ici dans l'armature de carcasse, l'adhésion entre l'élément de renfort textile et la composition de caoutchouc qui l'enrobe est assurée par exemple par une colle usuelle du type RFL.

Le pneumatique P1 comporte encore deux inserts de flanc 44, axialement intérieurs à l'armature de carcasse 32. Ces inserts 44 avec leur section radiale caractéristique en forme de croissant sont destinés à renforcer le flanc. Chaque insert 44 est fabriqué à partir d'une composition de caoutchouc à base d'une composition de caoutchouc réticulable M1 décrite ci-après. Chaque insert de flanc 44 est susceptible de contribuer à supporter une charge correspondant à une partie du poids du véhicule lors d'une situation de roulage à plat.

Entre autres caractéristiques, la composition M1 comprend un premier élastomère constitué de polybutadiène présentant une plasticité Mooney PMoo allant de 40 à 70 unités Mooney. En l'espèce, le premier élastomère présente une plasticité Mooney PMoo allant de 40 à 65 unités Mooney. De plus, le taux du premier élastomère de M1 compris dans un intervalle de valeurs allant de 50 à 80 pce, de préférence de 55 à 75 pce et plus préférentiellement de 60 à 70 pce.

Par ailleurs, dans la composition M1, le taux du premier élastomère est strictement supérieur à 50 pce.

La composition M1 comprend un deuxième élastomère constituant, avec le premier élastomère, la totalité du caoutchouc de la composition.

La composition M1 comprend un noir de carbone présentant une surface spécifique comprise dans un domaine de valeurs allant de 15 m$^2$/g à 25 m$^2$/g et un indice d'adsorption d'huile d'échantillon comprimé (COAN) compris dans un domaine de valeurs allant de 65 ml/100 g à 85 ml/100 g.

Le pneumatique comprend également une couche interne 46 d'étanchéité, de préférence en butyl, située axialement intérieure aux flancs 22 et radialement intérieure à l'armature de sommet 14 et s'étendant entre les deux bourrelets 24. Les inserts de flanc 44 sont situés axialement extérieurs à la couche interne 46. Ainsi, les inserts de flanc 44 sont disposés axialement entre l'armature de carcasse 32 et la couche interne 46.

La nappe de carcasse 34 comprend des éléments de renforts textiles 36 dont un est illustré sur la figure 2. Les éléments de renforts 36 sont parallèles les uns aux autres. Chaque élément de renfort 36 est radial. En d'autres termes, chaque élément de renfort 36 s'étend dans un plan sensiblement parallèle à la direction axiale du pneumatique P1.

En référence à la figure 2, chaque élément de renfort 36 comprend deux brins multifilamentaires 52, 54 en polyester qui sont surtordus individuellement à 270 tours/mètre puis retordus ensemble à 270 tours/mètre. Les deux brins 52, 54 sont enroulés en hélice l'un autour de l'autre.

Le polyester est choisi parmi le polyéthylène téréphtalate, le polyéthylène naphtalate, le polybutylène téréphtalate, le polybutylène naphtalate, le polypropylène téréphthalate ou le polypropylène naphthalate. En l'espèce, le polyester est du polyéthylène téréphtalate (PET).

Le titre de chaque brin multifilamentaire 52, 54 en polyester est compris dans un domaine de valeurs allant de 100 à 500 tex, de préférence de 300 à 370 tex. Ici, les titres des brins multifilamentaires 52, 54 en polyester sont égaux et valent 334 tex.

La torsion de chaque brin multifilamentaire 52, 54 en polyester avant retordage des brins multifilamentaires entre eux est comprise dans un domaine de valeur allant de 200 à 500 tours par mètre, de préférence de 200 à 340 tours par mètre, et plus préférentiellement de 240 à 300 tours par mètre. Ici, les torsions d'assemblage des brins multifilamentaires 52, 54 en polyester avant retordage des brins multifilamentaires entre eux sont égaux et valent 270 tours par mètres.

Les filaments élémentaires constitutifs de chaque brin multifilamentaire 52, 54 en polyester sont retordus selon un facteur de torsion compris entre 90 et 170 bornes incluses, de préférence entre 120 et 150 bornes incluses. Le PET ayant une masse volumique égale à 1,38, le facteur de torsion de chaque brin est ici égal à 133.

L'élément de renfort présente par exemple des brins identiques présentant la même torsion. Il s'agit alors d'un brin dit équilibré en torsion.

Pour la fabrication par retordage des éléments de renfort 36, on rappellera ici simplement, de manière bien connue de l'homme du métier, que chaque brin constitutif de l'élément de renfort final est tout d'abord individuellement tordu sur lui-même dans une direction donnée (par exemple torsion en Z de Y tours par mètre de brin) au cours d'une première étape pour former un surtors, puis que les brins ainsi tordus sur eux-mêmes sont ensuite retordus ensemble en sens inverse (par exemple torsion en S de X tours par mètre d'élément de renfort) pour former un retors, ici l'élément de renfort final 36.

La torsion avant retordage de chaque brin multifilamentaire peut être mesurée sur l'élément de renfort final par détordage des brins multifilamentaires constituants l'élément de renfort (par exemple par détorsion en Z de X tours par mètre d'élément de renfort) jusqu'à ce que l'élément de renfort ne présente plus aucune torsion, puis par détordage de chaque brin multifilamentaire (par exemple par détorsion en S de Y tours par mètres) jusqu'à ce que chaque brin ne présente plus aucune torsion. Le nombre de tours par mètre X, Y nécessaire à ces deux détordages donne alors respectivement la torsion d'assemblage de l'élément de renfort (ici X=270) et la torsion de chaque brin multifilamentaire avant retordage des brins entre eux (ici Y=270).

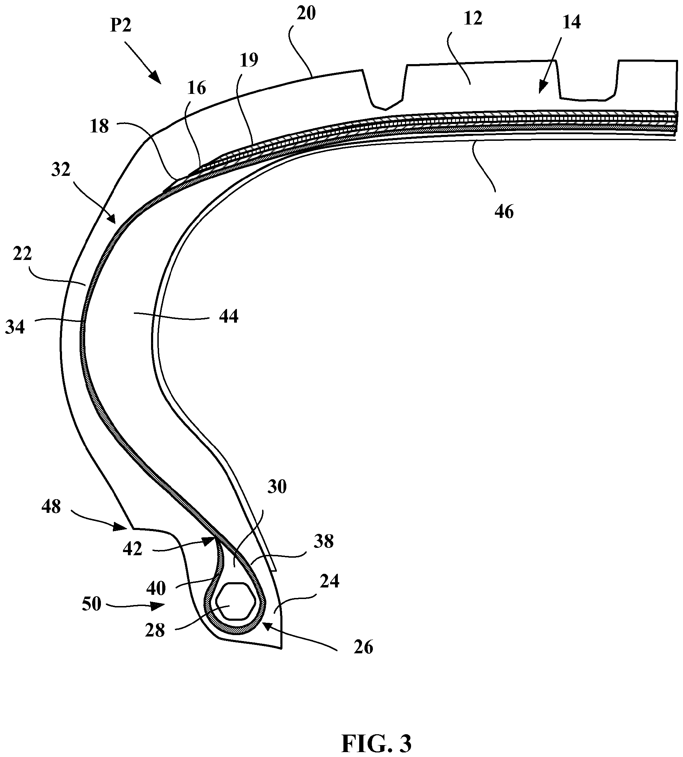

On a représenté sur la figure 3, un pneumatique P2 selon un deuxième mode de réalisation de l'invention. Les éléments analogues à ceux du premier mode de réalisation sont désignés par des références identiques.

A la différence du pneumatique P1 du premier mode de réalisation, le pneumatique P2 selon le deuxième mode de réalisation est du type à brin retour raccourci. L'extrémité radialement extérieure 42 du brin retour 40 est radialement à l'intérieur de l'extrémité 48 radialement la plus à l'extérieur du bourrelet 24 de la partie 50 du bourrelet 24 destinée à prendre appui sur le crochet de jante.

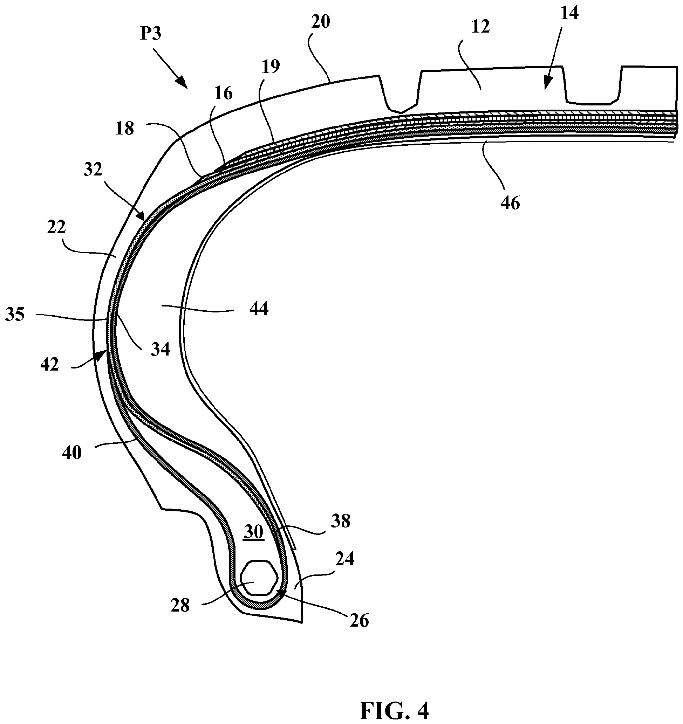

On a représenté sur la figure 4, un pneumatique P3 selon un troisième mode de réalisation de l'invention. Les éléments analogues à ceux du premier mode de réalisation sont désignés par des références identiques.

A la différence du pneumatique P1 selon le premier mode de réalisation, l'armature de carcasse 32 du pneumatique comprend deux nappes de carcasse 34, 35. L'armature de carcasse 32 comprend une première nappe de carcasse 34 ancrée dans chacun des bourrelets de façon identique à celle du pneumatique P1 et une deuxième nappe de carcasse 35, juxtaposée à la première nappe de carcasse et s'arrêtant radialement à l'extérieur de la tringle 28. La deuxième nappe de carcasse 35 est intercalée entre les brins aller 38 et retour 40.

Dans ce troisième mode de réalisation, le titre de chaque brin multifilamentaire en polyester est compris dans un domaine de valeurs allant de 100 à 500 tex, de préférence de 110 à 170 tex. Ici, les titres des brins multifilamentaires 52, 54 en polyester sont égaux et valent 144 tex.

La torsion de chaque brin multifilamentaire en polyester avant retordage des brins entre eux est comprise dans un domaine de valeurs allant de 200 à 500 tours par mètre, de préférence de 300 à 500 tours par mètre, et plus préférentiellement de 380 à 470 tours par mètre. Ici, les torsions d'assemblage des brins multifilamentaires 52, 54 en polyester avant retordage des brins entre eux sont égaux et valent 420 tours par mètres.

Le facteur de torsion K de chaque brin en polyester est ici égal à 136.

On a également fabriqué un pneumatique P4 selon un quatrième mode de réalisation de l'invention.

A la différence du pneumatique P1 selon le premier mode de réalisation, chaque insert 44 du pneumatique P4 selon le quatrième mode de réalisation est fabriqué à partir d'une composition de caoutchouc à base d'une composition de caoutchouc réticulable M2 décrite ci-après.

A la différence de la composition M1, le premier élastomère présente une plasticité Mooney PMoo telle que 40 unités Mooney $\leq$ PMmoo $\leq$ 65 unités Mooney, de préférence telle que 40 unités Mooney $\leq$ PMoo $\leq$ 60 unités Mooney et plus préférentiellement telle que 40 unités Mooney $\leq$ PMoo $\leq$ 55 unités Mooney. Encore plus préférentiellement, le premier élastomère présente une plasticité Mooney PMoo telle que 40 unités Mooney $\leq$ PMoo < 55 unités Mooney et encore plus préférentiellement telle que 40 unités Mooney $\leq$ PMoo $\leq$ 50 unités Mooney.

## EXEMPLES DE COMPOSITIONS DE L'INSERT DE FLANC DU PNEUMATIQUE SELON L'INVENTION ET TESTS COMPARATIFS

On a comparé dans le tableau 1 différentes compositions de caoutchouc réticulables ainsi que leurs propriétés physiques. Les quantités des différents composants sont données en parties en poids pour cent parties d'élastomère (pce).

La mesure de plasticité Mooney se fait selon le principe suivant et conformément à la norme ASTM D-1646. Le polybutadiène généralement cru est moulé dans une enceinte cylindrique chauffée à une température donnée, usuellement 100°C. Après une minute de préchauffage, un rotor de type L tourne au sein de l'éprouvette à 2 tours par minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

On mesure en seconde élongation (i.e., après un cycle d'accommodation au taux d'extension prévu pour la mesure elle-même) les modules sécants nominaux (ou contrainte apparente, en MPa) à 10% d'allongement (notés MA10) et à 100% d'allongement (notés MA100) à 23°C $\pm$ 2°C, et dans les conditions normales d'hygrométrie (50 $\pm$ 5% d'humidité relative) conformément à la norme ASTM D-412.

On mesure les pertes hystérétiques, notées P60, en pourcentage de rebond au sixième rebond à 60°C conformément à l'équation suivante : HL(%)=100.{(WO-W1)/W1} dans laquelle W0 est l'énergie fournie et W1 est l'énergie restituée.

Les mesures de fluage sont réalisées au moyen d'un flexomètre DOLI Ultimate fabriqué par DOLI Industrie Electronik GMBH conformément à la norme ASTM D-623 (« Heat Generation and Flexing Fatigue in Compression) sur des éprouvettes de 25 mm de longueur et 17,8 mm de diamètre. Chaque test dure 3 heures, période à l'issue de laquelle on enregistre le pourcentage de fluage (variation de la hauteur de l'éprouvette entre le début et la fin du test, exprimé en % de la hauteur initial) de l'éprouvette soumise à des flexions cycliques répétées. Si l'éprouvette casse avant l'expiration de ces 3 heures, le pourcentage de fluage n'est pas mesuré. On réalise le test dans une enceinte à 90°C avec une précontrainte de 2 MPa et en provoquant un allongement de 25% (6,25 mm) à une fréquence de 30 Hz.

On mesure également la vitesse d'extrusion de la composition de caoutchouc réticulable en fabriquant en continu sur une extrudeuse, une bande de la composition de caoutchouc à tester de largeur prédéterminée. On mesure la longueur de bande fabriquée sur un intervalle de temps prédéterminé. On en déduit la vitesse d'extrusion de la bande en m.min$^{-1}$.

Dans le tableau ci-dessous, la mention « NM » signifie que la caractéristique n'a pas été mesurée pour la composition concernée.

**Tableau 1**

| Formulations | C1 | C2 | C3 | C4 | F2 | M1 | M2 |
|---|---|---|---|---|---|---|---|
| Caoutchouc naturel | 50 | 35 | 50 | 35 | 35 | 35 | 35 |
| Polybutadiène fonctionnalisé étain 50 UM | 50 | | | | | | |
| Polybutadiène, Mooney 44 UM | | | 50 | 65 | | | 65 |
| Polybutadiène, Mooney 63 UM | | | | | | 65 | |
| Polybutadiène, Mooney 75 UM | | 65 | | | 65 | | |
| Noir de carbone N650 | 50 | 50 | | 50 | | | |
| Noir de carbone S204 | | | 50 | | 50 | 50 | 50 |
| Huile | | 2 | | | | | |
| Additifs | 9 | 9 | 9 | 8 | 9 | 9 | 9 |
| Système de Vulcanisation | 6.2 | 6.2 | 6.2 | 5.5 | 6.2 | 6.2 | 6.2 |
| **Propriétés physiques** | | | | | | | |
| MA10 à 23 °C (MPa) | 6.6 | 6.4 | 6.4 | 6.5 | 6.2 | 6.8 | 6.8 |
| MA100 à 23 °C (MPa) | 4.9 | 4.3 | 4.6 | 4.7 | 4.3 | 4.3 | 4.4 |
| P60 (%) | 5.9 | 6.4 | 5.6 | 6.5 | 5.5 | 6.8 | 6.8 |
| Fluage (%) | 4.5 | 14 | 6.9 | 23 | 2.9 | NM | NM |
| **Propriétés de mise en oeuvre (processabilité)** | | | | | | | |
| Vitesse d'extrusion (m.min$^{-1}$) | NM | NM | NM | NM | 1.5 | 2 | 6.5 |

Les compositions C1 à C4, F2 et M1 sont des compositions de caoutchouc réticulables témoins. La composition M2 est une composition de caoutchouc réticulable selon l'invention.

Chaque composition C1 à C4, F2 et M1, M2 comprend deux élastomères, ici deux élastomères du type diénique, ici un polybutadiène et du caoutchouc naturel.

Chaque composition C1 à C4, F2 et M1, M2 comprend des additifs comprenant du N-1, 3-diméthylbutyl-N-phényl-para-phénylènediamine ("Santoflex 6-PPD" de la société FLEXSYS), de la 2, 2, 4-thimethyl-1,polymère 2-dihydropuinoline (TMQ), de l'oxyde de zinc et de l'acide stéarique.

Chaque composition C1 à C4, F2 et M1, M2 comprend un système de vulcanisation classique comprenant des accélérateurs et du soufre insoluble. La composition C2 comprend une huile paraffinique.

Le polybutadiène fonctionnalisé étain (Nipol BR 1250H) utilisé dans la composition C1 présente une plasticité Mooney égale à 50 UM et un taux de motifs cis-1,4 égal à 35%. Le polybutadiène (Buna CB21, LANXESS) utilisé dans les compositions C2 et F2 présentent une plasticité Mooney égale à 75 UM et un taux de motifs cis-1,4 égal à 96%. Le polybutadiène (Buna CB24, LANXESS) utilisé dans les compositions C3, C4 et M2 présente une plasticité Mooney égale à 44 UM et un taux de motifs cis-1,4 égal à 96%. Le polybutadiène (Buna CB22, LANXESS) utilisé dans la composition M1 présente une plasticité Mooney égale à 63 UM et un taux de motifs cis-1,4 égal à 96%.

Le noir de carbone à faible surface spécifique et à haute structure S204 est commercialisé par la société Orion Engineered Carbon. Le noir de carbone S204 présente une surface spécifique égale à 19 m$^2$/g, un indice d'adsorption d'huile OAN égal à 138 ml/100 g, un indice d'adsorption d'huile d'échantillon comprimé COAN égal à 76 ml/100 g et un nombre d'iode égal à 19,6 mg/g.

On a fabriqué les différentes compositions C1 à C4, F2 et M1, M2 dans un mélangeur Banbury en mélangeant, dans une première étape, les composants du tableau 1, à l'exception du système de vulcanisation, jusqu'à dispersion des composants et jusqu'à atteindre une température comprise entre 130°C et 170°C. Puis, dans une deuxième étape, on ajoute le système de vulcanisation dans un mélangeur. On cuit la composition à 150°C pendant 25 minutes.

La composition C1 comprend un polybutadiène fonctionnalisé et un noir de carbone N650 classique pour un insert de flanc d'un pneumatique adapté pour un roulage à plat de l'état de la technique.

Dans la composition C2, on a remplacé le polybutadiène fonctionnalisé de C1 par un polybutadiène non fonctionnalisé présentant une plasticité Mooney élevée. Toutefois, la composition C2 présente une rigidité insuffisante (MA10 à 23°C) et un fluage trop élevé.

La composition C3 comprenant un polybutadiène présentant une plasticité Mooney faible avec un taux inférieur ou égal à 50 pce, ici 50 pce et un noir de carbone à faible surface spécifique et à haute structure, présente une rigidité insuffisante (MA10 à 23°C).

Les propriétés de la composition C4 comprenant un noir de carbone N650 classique sont encore plus dégradées que celles de C3, notamment le fluage qui est trop élevé.

La composition F2, comprenant un noir de carbone à faible surface spécifique et à haute structure ainsi qu'un polybutadiène présentant une plasticité Mooney supérieure à 70 UM, présente des propriétés physiques satisfaisantes mais une vitesse d'extrusion limitée.

Les compositions de caoutchouc M1, M2 présentent un module d'allongement MA10 à 23°C compris entre 5,5 MPa et 7 MPa, de préférence entre 6 MPa et 7 MPa et plus préférentiellement entre 6,5 et 7 MPa.

De plus, chaque composition M1 et M2 présente une perte hystérétique P60 inférieure à 8%, de préférence à 7%.

Chaque composition M1, M2 présente des propriétés de rigidité, notamment le MA10 à 23°C, permettant à l'insert de flanc d'assurer la performance RME. En outre, chaque composition M1, M2 présente une propriété de mise en oeuvre, ici la vitesse d'extrusion, supérieure à celle des autres compositions témoins, notamment F2.

Ainsi, les compositions M1 et M2 comprenant un taux majoritaire de polybutadiène présentant une plasticité Mooney PMoo relativement faible et un noir de carbone à faible surface spécifique et à haute structure présentent des propriétés physiques compatibles avec une utilisation dans un insert de flanc d'un pneumatique adapté pour un roulage à plat et une processabilité élevée.

On a comparé dans le tableau 2 des caractéristiques de l'élément de renfort 36 de pneumatiques P1 à P4 conformes aux modes de réalisation de l'invention précédemment décrits et d'éléments de renfort d'autres pneumatiques de l'état de la technique.

Entre autres caractéristiques, chaque pneumatique P1 à P4 comprend une armature de carcasse comprenant des éléments de renfort en polyester et deux inserts de flanc fabriqués à partir d'une composition de caoutchouc à base d'une des compositions de caoutchouc réticulables M1, M2 décrites ci-dessus.

Le pneumatique I est du type standard non pourvu de flancs autoporteurs et comprend une armature de carcasse comprenant une seule nappe de carcasse. La nappe de carcasse comprend des éléments de renfort textiles en polyester.

Le pneumatique II est adapté pour le roulage à plat et comprend une armature de carcasse comprenant deux nappes de carcasse. Chaque nappe de carcasse comprend des éléments de renfort textiles. Chaque élément de renfort comprend deux brins multifilamentaires en rayonne retordus ensemble. Le pneumatique II comprend des inserts de flancs fabriqué à partir d'une composition de caoutchouc à base de la composition de caoutchouc réticulable témoin C1 décrite ci-dessus.

Toutes les propriétés indiquées sont mesurées sur des éléments de renfort textiles encollés (c'est-à-dire prêts à l'emploi, ou bien extraits du pneumatique qu'ils renforcent) ayant été soumis à un conditionnement préalable ; par "conditionnement préalable", on entend le stockage des câblés (après séchage) pendant au moins 24 heures, avant mesure, dans une atmosphère standard selon la norme européenne DIN EN 20139 (température de 20 ± 2°C ; hygrométrie de 65 ± 2 %).

Le titre (ou densité linéique) des brins élémentaires ou des éléments de renfort est déterminé sur au moins deux échantillons, chacun correspondant à une longueur d'au moins 5 m, par pesée de cette longueur ; le titre est donné en tex (poids en grammes de 1000 m de produit - rappel: 0, 111 tex égal à 1 denier).

**Tableau 2**

| Pneumatique | I | II | P1/P2/P4 | P3 |
|---|---|---|---|---|
| Composition des inserts de flancs | NA | C4 | M1/M1/M2 | M1 |
| Nature des brins | PET/PET | Rayonne/Rayonne | PET/PET | PET/PET |
| Titres des brins (tex) | 334/334 | 184/184 | 334/334 | 144/144 |
| Torsions des brins (tours/m) | 270/270 | 480/480 | 270/270 | 420/420 |
| Diamètre (mm) | 0,96 | 0,68 | 0,96 | 0,62 |
| Facteur de torsion de chaque brin | 133 | 170 | 133 | 136 |

(suite)

| Pneumatique | I | II | P1/P2/P4 | P3 |
|---|---|---|---|---|
| Force à rupture (daN) de l'élément de renfort | 40 | 17 | 40 | 17 |
| Température de transition vitreuse (°C) | 110 | NA | 110 | 110 |
| Température de fusion (°C) | 260 | NA | 260 | 260 |
| Température de dégradation (°C) | ~ 350 | ~ 350 | ~ 350 | ~ 350 |

La mention NA (pour non applicable) indique que la valeur n'existe pas ou n'a pas de signification.

Le PET est commercialisé par la société Performance Fibers sous la dénomination 1X50. La rayonne est commercialisée par la société Cordenka sous la dénomination Super 3 - T700.

On a comparé dans le tableau 3 les performances RMG des pneumatiques I, II, P3 et P4 et la performance RME des pneumatiques I, II, P1 à P4.

Masse du pneumatique

La valeur de la masse est indiquée en unité relative (base 100) par rapport à la masse du pneumatique I de l'état de la technique. La valeur est d'autant plus inférieure à 100 que la masse est supérieure à celle du pneumatique I de l'état de la technique.

Résistance au roulement

La résistance au roulement est mesurée, après une étape de stabilisation thermique, à partir de la mesure de la décélération d'une roue pourvue du pneumatique testé appliquée contre un volant de test. La charge appliquée est égale à 85% de la charge ETRTO (« European Tyre and Rim Technical Organisation »).

La valeur de la résistance au roulement est indiquée en unité relative (base 100) par rapport à la résistance au roulement du pneumatique I de l'état de la technique. La valeur est d'autant plus inférieure à 100 que la résistance au roulement est élevée par rapport à celle du pneumatique I de l'état de la technique.

Confort

Le confort est déterminé à partir d'une mesure de fermeté verticale. La mesure de fermeté verticale est réalisée sur une roue comprenant un moyeu dynamométrique sur laquelle est monté le pneumatique testé. La roue est appliquée contre un volant de test sous une charge égale 80% de la charge ETRTO. Le volant comprend une barrette formant un obstacle. On détermine la fermeté verticale du pneumatique à partir de la force mesurée par le moyeu dynamométrique. Plus la force est élevée, plus la fermeté verticale est grande, moins bonne est la perception du confort.

La valeur de fermeté verticale est indiquée en unité relative (base 100) par rapport à la fermeté verticale du pneumatique I de l'état de la technique. La valeur est d'autant plus proche de 100 que la fermeté verticale est faible par rapport à celle du pneumatique I de l'état de la technique et donc le confort meilleur.

Test de roulage à plat

Le test de roulage à plat est effectué conformément au règlement 30 UNECE. La valeur 0 indique que le pneumatique testé a échoué au test de roulage à plat. La valeur 1 indique que le pneumatique testé a passé avec succès le test de roulage à plat.

**Tableau 3**

| Pneumatique | I | II | P1 | P2 | P3 | P4 |
|---|---|---|---|---|---|---|
| Masse du pneumatique | 100 | 79 | NM | NM | 80 | 82 |
| Résistance au roulement | 100 | 94 | NM | NM | 96 | 97 |
| Fermeté verticale | 100 | 92 | NM | NM | 90 | 92 |
| Test de roulage à plat | 0 | 1 | 1 | 1 | 1 | 1 |

Dans le tableau ci-dessus, la mention « NM » signifie que la caractéristique n'a pas été mesurée pour le pneumatique concerné.

Les résultats du tableau 3 indiquent que les pneumatiques selon l'invention assurent la performance RME requise (valeur 1 pour le test de roulage à plat). On notera en outre que, de façon avantageuse, les pneumatiques P1 à P4 satisfont la performance RME tout en s'affranchissant de l'utilisation de rayonne au sein des nappes de carcasses grâce à la combinaison de la composition selon l'invention et d'éléments de renfort en polyester. Les pneumatiques P3 et P4, mais également par transitivité des résultats, les pneumatiques P1 et P2, présentent, parmi les pneumatiques adaptés pour un roulage à plat (pneumatiques II, P1 à P4), les performances RMG les plus proches du pneumatique standard I. Bien que présentant des performances RMG inférieures à celles du pneumatique standard I, chaque pneumatique selon l'invention présente des performances RMG supérieures ou égales à celles du pneumatique II adapté pour un roulage à plat tout en s'affranchissant de l'utilisation de rayonne au sein des nappes de carcasse. En outre, l'armature de carcasse de chaque pneumatique selon l'invention présente une force à rupture au moins égale à celle des pneumatiques I et II.

L'invention ne se limite pas aux modes de réalisation précédemment décrits.

Les éléments de renfort pourront être réalisés dans un matériau textile différent du polyester. Par exemple, le matériau textile pourra également être choisi parmi un polyamide, une polycétone, une cellulose ou un mélange de ces matériaux.

On pourra prévoir un mode de réalisation dans lequel le brin retour 40 remonte entre l'armature de sommet 14, ici la nappe de sommet 18 et le brin aller 38. Dans ce cas, le pneumatique est généralement appelé pneumatique à architecture « shoulder lock » pour indiquer que le brin retour 40 est verrouillé au niveau de l'épaule entre le brin aller 38 et l'armature de sommet 18. Une telle architecture permet de renforcer le pneumatique au niveau de l'épaule de ce dernier.

On pourra aussi prévoir un mode de réalisation dans lequel l'armature de carcasse comprend un élément de renfort auxiliaire s'étendant entre le bourrelet 24 et le sommet 12 du pneumatique. Cet élément de renfort auxiliaire est intercalé entre les brins aller 38 et retour 40 et remonte entre la nappe de sommet 18 et le brin aller 38.

Ces deux modes de réalisation précédents sont particulièrement avantageux, dans le cas où le pneumatique comprend une unique nappe de carcasse, le brin retour 40 ou l'élément de renfort auxiliaire assurant un renforcement supplémentaire dans la zone de l'épaule du pneumatique.

En outre, chaque brin multifilamentaire pourra avoir une torsion différente de celle de l'autre ou des autres brins multifilamentaires de façon à obtenir un élément de renfort déséquilibré en torsion.

On pourra également combiner les caractéristiques des différents modes de réalisation décrits ou envisagés ci-dessus sous réserve que celles-ci soient compatibles entre elles.

## Revendications

1. Composition (M1, M2) de caoutchouc réticulable, **caractérisée en ce qu'**elle comprend:

   - un premier élastomère constitué de polybutadiène présentant une plasticité Mooney PMoo telle que $40 \leq$ PMoo $< 55$ unités Mooney mesurée selon la norme ASTM D-1646,
   - un deuxième élastomère,
   - un noir de carbone présentant une surface spécifique comprise dans un domaine de valeurs allant de 15 m$^2$/g à 25 m$^2$/g mesurée selon la norme ASTM D-6556 et un indice d'adsorption d'huile d'échantillon comprimé (COAN) compris dans un domaine de valeurs allant de 65 ml/100 g à 85 ml/100 g mesuré selon la norme ASTM D-3493.

2. Composition (M1, M2) selon la revendication précédente, dans lequel le taux du premier élastomère est strictement supérieur à 50 pce.

3. Composition (M1, M2) selon l'une quelconque des revendications précédentes, dans laquelle le taux du premier élastomère est compris dans un intervalle de valeurs allant de allant de 50 à 80 pce, de préférence de 55 à 75 pce et plus préférentiellement de 60 à 70 pce.

4. Composition (M1, M2) selon l'une quelconque des revendications précédentes, dans laquelle le deuxième élastomère est du type diénique.

5. Composition (M1, M2) selon l'une quelconque des revendications précédentes, dans laquelle le deuxième élastomère du type diénique est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères.

**6.** Composition (M1, M2) selon l'une quelconque des revendications précédentes, comprenant un taux de noir de carbone compris dans un domaine de valeurs allant de 30 à 100 pce, de préférence de 35 à 80 pce, plus préférentiellement de 40 à 75 pce et encore plus préférentiellement de 40 à 60 pce.

**7.** Pneumatique (P1, P2, P3, P4) adapté pour un roulage à plat, **caractérisé en ce qu'**il comprend un insert de flanc (44) fabriqué à partir d'une composition de caoutchouc à base d'une composition de caoutchouc réticulable selon l'une quelconque des revendications précédentes.

**8.** Pneumatique (P1, P2, P3, P4) selon la revendication 7, comprenant une armature de carcasse (32) comprenant au moins une nappe de carcasse (34).

**9.** Pneumatique (P1, P2, P4) selon la revendication 8, dans lequel l'armature de carcasse (32) comprend une seule nappe de carcasse (34).

**10.** Pneumatique (P1, P2, P3, P4) selon la revendication 8 ou 9, dans lequel la nappe de carcasse (34) comprend au moins un élément de renfort (36) en polyester.

**Patentansprüche**

**1.** Vernetzbare Kautschukzusammensetzung (M1, M2), **dadurch gekennzeichnet, dass** sie Folgendes umfasst:

- ein erstes Elastomer, das aus Polybutadien mit einer solchen gemäß der ASTM-Norm D-1646 gemessenen Mooney-Plastizität PMoo, dass $40 \leq$ PMoo < 55 Mooney-Einheiten, besteht,
- ein zweites Elastomer,
- Ruß mit einer gemäß der ASTM-Norm D-6556 gemessenen spezifischen Oberfläche in einem Wertebereich von 15 $m^2$/g bis 25 $m^2$/g und einem gemäß der ASTM-Norm D-3493 gemessenen COAN-Zahl (Ölabsorptionszahl für komprimierte Probe) in einem Wertebereich von 65 ml/100 g bis 85 mm/100 g.

**2.** Zusammensetzung (M1, M2) nach dem vorhergehenden Anspruch, wobei der Gehalt des ersten Elastomers streng über 50 phe liegt.

**3.** Zusammensetzung (M1, M2) nach einem der vorhergehenden Ansprüche, wobei der Gehalt des ersten Elastomers in einem Wertebereich von 50 bis 80 phe, vorzugsweise von 55 bis 75 phe und weiter bevorzugt von 60 bis 70 phe liegt.

**4.** Zusammensetzung (M1, M2) nach einem der vorhergehenden Ansprüche, wobei das zweite Elastomer vom Dien-Typ ist.

**5.** Zusammensetzung (M1, M2) nach einem der vorhergehenden Ansprüche, wobei das zweite Elastomer vom Dien-Typ aus der Gruppe bestehend aus Polybutadienen (BR), synthetischen Polyisoprenen (IR), Naturkautschuk (NR), Butadien-Copolymeren, Isopren-Copolymeren und Mischungen dieser Elastomere ausgewählt ist.

**6.** Zusammensetzung (M1, M2) nach einem der vorhergehenden Ansprüche, umfassend einen Rußgehalt in einem Wertebereich von 30 bis 100 phe, vorzugsweise von 35 bis 80 phe, weiter bevorzugt von 40 bis 75 phe und noch weiter bevorzugt von 40 bis 60 phe.

**7.** Notlauffähiger Reifen (P1, P2, P3, P4), **dadurch gekennzeichnet, dass** er einen Seitenwandeinsatz (44) aus einer Kautschukzusammensetzung auf Basis einer vernetzbaren Kautschukzusammensetzung nach einem der vorhergehenden Ansprüche umfasst.

**8.** Reifen (P1, P2, P3, P4) nach Anspruch 7, umfassend eine Karkassenbewehrung (32), die mindestens eine Karkassenlage (34) umfasst.

**9.** Reifen (P1, P2, P4) nach Anspruch 8, wobei die Karkassenbewehrung (32) eine einzige Karkassenlage (34) umfasst.

**10.** Reifen (P1, P2, P3, P4) nach Anspruch 8 oder 9, wobei die Karkassenlage (34) mindestens ein Verstärkungselement (36) aus Polyester umfasst.

**Claims**

**1.** Crosslinkable rubber composition (M1, M2), **characterized in that** it comprises:

- a first elastomer consisting of polybutadiene having a Mooney plasticity PMoo such that 40 Mooney units $\leq$ PMmoo < 55 Mooney units measured according to the ASTM D-1646 standard,
- a second elastomer,
- a carbon black having a specific surface area within a range of values extending from 15 $m^2/g$ to 25 $m^2/g$ measured according to the ASTM D-6556 standard and an oil adsorption number of compressed sample (COAN) within a range of values extending from 65 ml/100 g to 85 ml/100 g measured according to the ASTM D-3493 standard.

**2.** Composition (M1, M2) according to the preceding claim, in which the content of the first elastomer is strictly greater than 50 phr.

**3.** Composition (M1, M2) according to any one of the preceding claims, in which the content of the first elastomer is within a range of values extending from 50 to 80 phr, preferably from 55 to 75 phr and more preferably from 60 to 70 phr.

**4.** Composition (M1, M2) according to any one of the preceding claims, in which the second elastomer is of diene type.

**5.** Composition (M1, M2) according to any one of the preceding claims, in which the second elastomer of diene type is selected from the group consisting of polybutadienes (BR), synthetic polyisoprenes (IR), natural rubber (NR), butadiene copolymers, isoprene copolymers and the mixtures of these elastomers.

**6.** Composition (M1, M2) according to any one of the preceding claims, comprising a content of carbon black within a range of values extending from 30 to 100 phr, preferably from 35 to 80 phr, more preferably from 40 to 75 phr and more preferably still from 40 to 60 phr.

**7.** Run-flat tyre (P1, P2, P3, P4), **characterized in that** it comprises a sidewall insert (44) manufactured from a rubber composition based on a crosslinkable rubber composition according to any one of the preceding claims.

**8.** Tyre (P1, P2, P3, P4) according to Claim 7, comprising a carcass reinforcement (32) comprising at least one carcass ply (34).

**9.** Tyre (P1, P2, P4) according to Claim 8, in which the carcass reinforcement (32) comprises a single carcass ply (34).

**10.** Tyre (P1, P2, P3, P4) according to Claim 8 or 9, in which the carcass ply (34) comprises at least one reinforcing element (36) made of polyester.

FIG. 1

FIG. 2

**FIG. 3**

**FIG. 4**